Europäisches Patentamt

European Patent Office

Office européen des brevets

(11) Veröffentlichungsnummer: **0 221 301 B1**

(12) **EUROPÄISCHE PATENTSCHRIFT**

(45) Veröffentlichungstag der Patentschrift:
04.04.90

(51) Int. Cl.⁴: **C08G 12/40, C04B 24/22**

(21) Anmeldenummer: **86112734.8**

(22) Anmeldetag: **15.09.86**

(54) **Lagerstabile konzentrierte wässrige Lösungen von Melamin-Formaldehydkondensaten, Verfahren zu deren Herstellung, sowie deren Verwendung.**

(30) Priorität: **04.10.85 DE 3535501**

(43) Veröffentlichungstag der Anmeldung:
**13.05.87 Patentblatt 87/20**

(45) Bekanntmachung des Hinweises auf die Patenterteilung:
**04.04.90 Patentblatt 90/14**

(84) Benannte Vertragsstaaten:
**AT BE CH DE FR GB IT LI LU NL SE**

(56) Entgegenhaltungen:
**EP-A- 0 115 022**
**DE-A- 2 359 291**
**DE-A- 2 725 078**
**GB-A- 1 048 983**

(73) Patentinhaber: **Chemie Linz Gesellschaft m.b.H.,
St.Peter-Strasse 25, A-4021 Linz(AT)**

(84) Benannte Vertragsstaaten: **BE CH DE FR GB IT LI LU NL·
SE AT**

(72) Erfinder: **Pieh, Stefan, Dr., Forsthausstrasse 39a,
A-4060 Leonding(AT)**
Erfinder: **Krammer, Johann, Schumpeterstrasse 2,
A-4020 Linz(AT)**

(74) Vertreter: **Kunz, Ekkehard, Dr., Chemie Holding AG
Patentwesen St. Peter-Strasse 25, A-4021 Linz(AT)**

ACTORUM AG

## Beschreibung

Die Erfindung betrifft konzentrierte wäßrige Lösungen von sulfonsäuregruppenhältigen Melamin-Formaldehydkondensaten, die zur Erhöhung ihrer Lagerstabilität Hydantoinderivate enthalten, Verfahren zu deren Herstellung sowie deren Verwendung.

Derartige Kondensate werden vorzugsweise als Zusatzmittel zu anorganischen Bindemitteln, wie z. B. Zement oder Anhydrit, verwendet, um deren Verarbeitungs-bzw. Gebrauchseigenschaften, wie z. B. Fließfähigkeit, Erhärtungsgeschwindigkeit oder Festigkeit zu verbessern. Die Anwendung dieser Harze erfolgt vorwiegend in Form von wäßrigen Lösungen, die ohne stabilisierende Zusätze nur bis zu einer Konzentration von etwa 20 % eine ausreichende Lagerstabilität aufweisen. Mit Erhöhung der Feststoffkonzentration nimmt die Lagerstabilität zunehmend ab, sodaß z. B. 40 %ige Lösungen, deren Verwendung insbesondere wegen des geringeren Aufwandes für Transport und Lagerhaltung vorteilhaft ist, nur kurze Zeit einsetzbar sind.

Aus der DE-OS 3 248 586 sind sulfonierte Melamin-Formaldehydharzlösungen mit einem Zusatz eines cyclischen Lactams und/oder eines gegebenenfalls substituierten Benzolsulfonsäureamids bekannt, deren Lagerstabilität in 40 %iger wäßriger Lösung bei 40°C zwischen 12 und 24 Wochen beträgt, gegenüber nur 6 Wochen ohne Zusatz.

In der DE-PS 2 359 291 sind sulfonierte Melamin-Formaldehydharzlösungen beschrieben, die ohne stabilisierende Zusätze auch als 30 bis 50 %ige wäßrige Lösungen eine Haltbarkeit besitzen, die jener einer 20 %igen Lösung entspricht.

Dieser Effekt wird durch das Einhalten bestimmter Kondensationsbedingungen, sowie durch eine zusätzliche an die erste alkalische und saure Kondensation anschließende weitere alkalische Kondensationsstufe erreicht, bei der das zunächst höhermolekulare Kondensat der zweiten Stufe bis zu einer genau definierten Viskosität abgebaut wird.

Ein nur beschränkt wasserlösliches Melamin-Formaldehydharz, das keine Sulfonsäuregruppen besitzt, das als Imprägnierharz für Dekorpapiere zur Oberflächenbeschichtung von Holzwerkstoffplatten verwendet wird und das als Modifizierungsmittel zur Verbesserung der Wasser- und Bewitterungsbeständigkeit sowie der Rißbeständigkeit der ausgehärteten Harzfilme 1 bis 20 Gew.% 5,5-Dimethylhydantoin enthält, ist in der DE-OS 2 725 078 beschrieben.

Die bisher bekannten Zusätze zur Erhöhung der Lagerstabilität von konzentrierten Melamin-Formaldehydharzlösungen zeigen eine in der praktischen Anwendung zu geringe Wirkung.

Es konnte nun unerwarteterweise gefunden werden, daß sulfonsäuregruppenhältige konzentrierte Melamin-Formaldehydharzlösungen, insbesondere solche mit einem Harzgehalt von 30 % und mehr, durch Zusatz eines Hydantoinderivats während oder nach der Kondensation, gegenüber den bekannten Harzlösungen eine wesentlich verbesserte Lagerstabilität besitzen.

Gegenstand der Erfindung sind demnach lagerstabile konzentrierte wäßrige Lösungen von sulfonsäuregruppenhältigen Melamin-Formaldehydkondensaten mit einem Gehalt an Amidgruppen enthaltenden cyclischen Verbindungen, die dadurch gekennzeichnet sind, daß die cyclischen Verbindungen Hydantoinderivate der allgemeinen Formel (I), des Formelblattes, sind, in der $R_1$ und $R_2$ unabhängig voneinander Wasserstoff oder einen Alkylrest mit maximal 10 C-Atomen, $R_4$ Wasserstoff, einen Alkylolrest mit maximal 4 C-Atomen oder einen Carbonsäureamidrest mit maximal 4 C-Atomen und $R_3$ Wasserstoff, einen Alkylolrest mit maximal 4 C-Atomen, einen Carbonsäureamidrest mit maximal 4 C-Atomen oder einen Rest der allgemeinen Formel (II), des Formelblattes, in der $R_1$, $R_2$ und $R_4$ wie in Formel (I) definiert sind, bedeuten.

Das Hydantoinderivat wird dem Melamin-Formaldehydkondensat beispielsweise in einer Menge von 0,1 bis 20 Mol %, vorzugsweise von 0,5 - 10 Mol %, bezogen auf Melamin, zugesetzt. Ein Gehalt von 1 bis 5 Mol % ist besonders bevorzugt.

Da das Problem der ungenügenden Lagerstabilität im allgemeinen erst bei Melaminharzlösungen mit einer Konzentration von über 20 % auftritt, werden die erfindungsgemäßen, stabilen Melaminharzlösungen vornehmlich bei Konzentrationen von erheblich über 20 %, vorzugsweise 30 % und mehr, angewendet. Für den praktischen Gebrauch ergibt sich eine Obergrenze von ca. 50 %igen Lösungen, was jedoch naturgemäß nicht ausschließen kann, daß der stabilisierende Effekt des Hydantoinderivats auch bei noch höher konzentrierten Lösungen vorhanden ist.

Es hat sich als günstig erwiesen, solche Melamin-Formaldehydkondensate einzusetzen, bei denen das molare Verhältnis Formaldehyd zu Melamin in einem Bereich von 2,5 : 1 bis 4 : 1 liegt.

Es können beispielsweise Hydantoinderivate verwendet werden, in denen $R_1$ und $R_2$ unabhängig voneinander Wasserstoff, einen Methyl-, Äthyl-, Propyl-, Butyl-, Isobutyl-, Pentyl- oder Hexylrest, $R_3$ und $R_4$ unabhängig voneinander Wasserstoff, einen Methylol-, Äthylol-, Propylol-, Butylol-, Formamid-, Acetamid-, Propionsäureamid- oder Buttersäureamidrest bedeuten. Die Hydantoinderivate können auch in dimerer Form vorliegen, in der die jeweiligen N-1-Atome des Hydantoins über Methylengruppen miteinander verbunden sind und die Reste $R_1$, $R_2$ und $R_4$ obige Bedeutung aufweisen. Wegen seiner leichten Zugänglichkeit und guten Wirkung ist das 5-5-Dimethylhydantoin besonders bevorzugt.

Die erfindungsgemäßen lagerstabilen Melaminharzlösungen sind prinzipiell nach allen für solche Harze bekannten Verfahren herstellbar. Vorzugsweise erhält man sie durch eine zweistufige Kondensation der entsprechenden Mengen von Melamin, Formaldehyd und einem Alkalisulfit, wobei in der ersten Stufe bei einem pH-Wert von 8 - 12 solange erhitzt wird, bis kein Sulfit mehr nachweisbar ist. In der zweiten Stufe wird nach Zugabe einer Säure und gegebenenfalls des Hydantoinderivats bei einem pH-Wert von 3 - 7 bis zum gewünschten Kondensationsgrad fertig kondensiert. Der Kondensationsgrad wird beispielsweise durch Messung der Auslaufviskosität nach DIN 53211 bei 50°C gemessen. Bei Verwendung einer 4 mm-Düse liegt sie in der Regel zwischen 10 und 30 Sekunden und ist von der Natur des Harzes abhängig. Die Kondensation wird jeweils soweit geführt, daß bei einer mit dem erhaltenen Harz modifizierten Bindemittelmischung eine optimale Fließfähigkeit erreicht wird. Anschließend wird mit einem Alkali auf einen pH-Wert von 7 - 13 eingestellt und gegebenenfalls das Hydantoinderivat erst jetzt zugesetzt. Die erhaltenen Melaminharzlösungen können entweder als solche oder nach Eindampfen im Sprühtrockner als festes Pulver verwendet werden.

Die erfindungsgemäßen Melaminharze werden bevorzugt als verflüssigende Zusatzmittel zu anorganischen Bindemitteln, wie z. B. Zement, Anhydrit, Gips, Kaolin, Flugasche, Magnesiazement oder Puzzolanen zugesetzt, wodurch deren Fließeigenschaften verbessert werden. Andererseits ist es möglich, durch die Zugabe dieser Zusatzmittel eine Bindemittelmischung mit gleichen Fließeigenschaften unter Verwendung von geringeren Wassermengen zu erhalten, wodurch dann die Festigkeit des ausgehärteten Baustoffes erhöht ist.

Die erfindungsgemäß verwendeten Hydantoinderivate sind zum Teil Handelsprodukte bzw. gelingt ihre Herstellung beispielsweise gemäß AT-PS 353 283 oder Kirk-Othmer, Encyclopedia of Chemical Technology, Third Edition, Volume 12 (1980), Seite 692 - 711.

Als Maß für die Lagerstabilität der erfindungsgemäßen Harzlösungen wurde für die Beispiele 1 bis 6 die Lagerzeit in Tagen angegeben, nach der die Viskosität, gemessen nach DIN 53211 bei 20°C im 4 mm-Auslaufbecher auf einen Wert von 195 Sekunden angestiegen war. Über diesem Wert sind die Handhabung und Verarbeitbarkeit der Harzlösungen aufgrund der hohen Viskositäten bereits erheblich erschwert.

In den Beispielen 7 bis 22 wurde die Lagerstabilität durch Messung der nach 92 Tagen erreichten Viskosität bei 20°C in Sekunden gemäß DIN 53211 im 4 mm-Auslaufbecher bzw. im 6 mm-Auslaufbecher (Beispiel 20 und 20 A) angegeben.

Die vorliegende Erfindung wird in den folgenden Beispielen näher erläutert, wobei die in Tabelle 1 angeführten Hydantoinderivate beispielhaft verwendet wurden.

### Tabelle 1: Verwendete Hydantoinderivate

| | |
|---|---|
| H | Hydantoin |
| MH | 5-Methylhydantoin |
| DMH | 5,5-Dimethylhydantoin |
| MEH | 5,5-Methylethylhydantoin |
| MBH | 5,5-Methylisobutylhydantoin |
| DMMH | 5,5-Dimethyl-3-methylolhydantoin |
| DMDM | 5,5-Dimethyl-1,3-dimethylolhydantoin |
| DMDP | 5,5-Dimethyl-1,3-dipropionsäureamidohydantoin |
| BDMH | 1,1'-Bis(5,5-dimethylhydantoinyl)methan |
| BDMM | 1-(5,5-dimethylhydantoinyl)-1'-(5,5-dimethyl-3-methylolhydantoinyl)methan |
| BDME | 1-(5,5-dimethylhydantoinyl)-1'-(5,5-dimethyl-3-ethylolhydantoinyl)methan |

Beispiel 1:

In einem mit Rührer, Thermometer und Rückflußkühler versehenen Glasreaktor wurden 238 Teile Wasser, 126 Teile Melamin, 248,2 Teile Formalin 36,3 %ig und 95,05 Teile Natriumdisulfit, entsprechend einem molaren Verhältnis Melamin : Formaldehyd : Disulfit von 1 : 3 : 1, mit 20 %iger Natronlauge auf pH 9,9 gestellt, auf 75°C erwärmt und bei dieser Temperatur so lange kondensiert, bis kein Sulfit mehr nachweisbar war. Anschließend stellte man durch Zugabe von 50 %iger Ameisensäure auf pH 6,3, setzte 3,84 Teile Dimethylhydantoin zu, entsprechend einer Menge von 3 Mol % bezogen auf Melamin und stellte den pH-Wert wieder auf 6,3. Es wurde nun bei 75°C bis zu einer Viskosität von 22 Sekunden bei 50°C, gemessen im 4 mm-Auslaufbecher (DIN 53211), kondensiert. Anschließend wurde der pH-Wert durch Zugabe von 20 %iger Natronlauge auf 8,5 gestellt und das Reaktionsgemisch abgekühlt. Der Feststoffgehalt der erhaltenen Harzlösung lag bei 41,6 Gew.%, ihre Viskosität bei 20°C bei 47 Sekunden. Nach einer Lagerzeit von 120 Tagen bei 25°C war die Viskosität auf den für eine einwandfreie Verarbeitung gerade noch tragbaren Wert von 195 Sekunden, gemessen bei 20°C im 4 mm-Auslaufbecher nach DIN 53211, angestiegen. Bei einer Lagerung bei 50°C war die Viskosität von 195 Sekunden bereits nach 20 Tagen erreicht.

Vergleichsbeispiel 1A:

Analog zu Beispiel 1 wurde eine Harzlösung hergestellt, jedoch ohne Zugabe eines Hydantoinderivates. Es wurde eine 41,5 %ige Harzlösung mit einer Viskosität bei 20°C von 53 Sekunden erhalten. Der zulässige Viskositätswert von 195 Sekunden wurde bereits nach einer Lagerung von 17 Tagen bei 25°C erreicht, nach 30 Tagen war das Harz fest. Bei einer Lagerung bei 50°C wurde die 195-Sekunden-Viskosität bereits nach 7 Tagen erreicht.

Beispiel 2 - 6:

Es wurden Harzlösungen analog zu Beispiel 1 hergestellt, wobei jedoch verschiedene Hydantoinderivate, wie in Tabelle 2 angegeben, zugesetzt wurden. Außerdem sind in Tabelle 2 die Konzentrationen, die Viskositäten bei 50°C und 20°C, sowie die Lagerstabilitäten der erhaltenen Harzlösungen, gemessen in Tagen bis zum Erreichen einer Viskosität von 195 Sekunden gemäß DIN 53211, angeführt.

## Tabelle 2:

### (Molverhältnis Melamin : Formaldehyd : Disulfit = 1 : 3 : 1)

| Bei-spiel | Hydantoinderivat[1] (3 Mol%) | Gew. Teile | Konz. (%) | Viskosität (sec) 20°C | 50°C | Lagerstabilität bei 25°C (Tage) |
|---|---|---|---|---|---|---|
| 1A | - | - | 41,5 | 53 | 22 | 17[2] (7 bei 50°C) |
| 1 | DMH | 3,84 | 41,6 | 47 | 22 | 120 (20 bei 50°C) |
| 2 | DMMH | 4,74 | 41,6 | 41 | 21 | 120 |
| 3 | MBH | 5,10 | 41,6 | 46 | 22 | 94 |
| 4 | MEH | 4,27 | 41,6 | 42 | 21 | 90 |
| 5 | MH | 3,06 | 41,2 | 36 | 19 | 116 |
| 6 | DMDM | 5,65 | 41,2 | 36 | 19 | 120 |

[1] Abkürzung in Tabelle 1 erläutert

[2] nach 30 Tagen fest

Beispiel 7:

In einer Apparatur analog zu Beispiel 1 wurden 256,7 Teile Wasser, 126 Teile Melamin (1 Mol), 258,7 Teile Formalin 36,3 %ig (3,13 Mol) und 107,4 Teile Natriumdisulfit (1,13 Mol) mit 20 %iger Natronlauge auf pH 9,9 gestellt, auf 75°C erwärmt und so lange kondensiert, bis kein Sulfit mehr nachweisbar war. Anschließend stellte man durch Zugabe von 50 %iger Ameisensäure auf pH 6,2, setzte 1,28 Teile (0,01 Mol) Dimethylhydantoin zu, entsprechend einer Menge von 1 Mol % bezogen auf Melamin und stellte wieder auf pH 6,2. Es wurde nun bei 75°C bis zu einer Viskosität von 14 Sekunden, gemessen nach DIN 53211 bei 50°C im 4 mm-Auslaufbecher, kondensiert. Anschließend wurde mittels 20 %iger Natronlauge auf pH 9,0 gestellt und abgekühlt. Die Konzentration, Viskosität und Lagerstabilität bei 25°C (angegeben als Viskosität gemäß DIN 53211 in Sekunden bei 20°C im 4 mm-Auslaufbecher nach 92 Tagen Lagerung) der erhaltenen Harzlösung sind in Tabelle 3 angegeben.

## Tabelle 3

(Molverhältnis Melamin : Formaldehyd : Disulfit = 1 : 3,13 : 1,13)

| Bei-spiel | Hydantoinderivat | | | Konz. (%) | Viskosität (sec) | | Lagerstabilität (Visk.nach 92 Tagen) |
|---|---|---|---|---|---|---|---|
| | Art | Mol% | Gew. Teile | | 20°C | 50°C | (sec/20°C) |
| 7A | - | - | - | 41,3 | 26 | 16 | 69 |
| 7 | DMH | 1 | 1,28 | 41,4 | 20 | 14 | 34 |
| 8 | DMH | 3 | 3,84 | 41,3 | 25 | 15 | 30 |
| 9 | DMH | 4 | 5,13 | 41,4 | 23 | 14 | 25 |
| 10 | DMH | 5 | 6,41 | 41,6 | 20 | 14 | 23 |
| 11 | DMH | 7 | 8,97 | 41,3 | 20 | 14 | 22 |
| 12[1] | DMH | 3 | 3,84 | 40,9 | 19 | 14 | 24 |
| 13 | H | 3 | 3,00 | 41,3 | 24 | 15 | 25 |
| 14 | BDMH | 3 | 8,05 | 41,3 | 26 | 16 | 32 |
| 15 | BDMM | 3 | 8,95 | 41,3 | 23 | 16 | 27 |
| 16 | BDME | 3 | 9,37 | 41,3 | 24 | 15 | 28 |
| 17 | DMDP | 3 | 8,11 | 41,3 | 26 | 15 | 66 |
| 18 | DMH | 20 | 25,6 | 41,0 | 17 | 14 | 19 |
| 19 | DMH | 10 | 12,8 | 41,2 | 19 | 14 | 21 |
| 20 | DMH | 3 | 3,84 | 45,0 | 79 | 27 | 32[2] |
| 20A | - | - | - | 45,0 | 100 | 27 | 105[2] |

[1] Zugabe von DMH nach beendeter saurer Kondensation

[2] gemessen im 6 mm-Auslaufbecher

### Beispiel 7A

Es wurde eine Harzlösung analog zu Beispiel 7 hergestellt, jedoch ohne Zugabe eines Hydantoinderivats. Konzentration, Viskosität und Lagerstabilität sind in Tabelle 3 angegeben.

### Beispiel 8 - 17:

Es wurden Harzlösungen analog zu Beispiel 7 hergestellt, wobei jedoch - wie in Tabelle 3 angegeben - verschiedene Hydantoinderivate, sowie unterschiedliche Konzentrationen an Hydantoinderivat verwendet wurden. Im Beispiel 12 wurde das Dimethylhydantoin erst nach beendeter Kondensation zugegeben. Konzentration, Viskosität und Lagerstabilität bei 25°C der erhaltenen Harzlösungen sind ebenfalls in Tabelle 3 angegeben.

### Beispiel 18:

In einer Apparatur analog zu Beispiel 1 wurden 256,7 Teile Wasser, 126 Teile Melamin (1 Mol), 258,7 Teile Formalin 36,3 %ig (3,13 Mol) und 107,4 Teile Natriumdisulfit (1,13 Mol) mit 50 %iger Ameisensäure auf pH 8 gestellt, auf 60°C erwärmt und so lange kondensiert, bis kein Sulfit mehr nachweisbar war. Anschließend stellte man durch Zugabe von 50 %iger Ameisensäure auf pH 3, setzte 25,6 Teile Dimethylhydantoin (20 Mol% bezogen auf Melamin) und 32,5 Teile Wasser zu und stellte wieder auf pH 3. Es wurde nun bei 60°C bis zu einer Viskosität von 14 Sekunden, gemessen nach DIN 53211 bei 50°C im 4 mm-Auslaufbecher, kondensiert. Anschließend wurde mittels 20 %iger Natronlauge auf pH 7 gestellt und abgekühlt. Die Konzentration, Viskosität und Lagerstabilität bei 25°C (angegeben als Viskosität gemäß DIN 53211 in Sekunden bei 20°C im 4 mm-Auslaufbecher nach 92 Tagen Lagerung) der erhaltenen Harzlösung sind in Tabelle 3 angegeben.

### Beispiel 19:

In einer Apparatur analog zu Beispiel 1 wurden 256,7 Teile Wasser, 126 Teile Melamin (1 Mol), 258,7 Teile Formalin 36,3 %ig (3,13 Mol) und 107,4 Teile Natriumdisulfit (1,13 Mol) mit 20 %iger Natronlauge auf pH 12 gestellt, auf 95°C erwärmt und so lange kondensiert, bis kein Sulfit mehr nachweisbar war. Anschließend stellte man durch Zugabe von 50 %iger Ameisensäure auf pH 7, setzte 12,8 Teile Dimethylhydantoin (10 Mol% bezogen auf Melamin) und 16,3 Teile Wasser zu und stellte wieder auf pH 7. Es wurde nun bei 95°C bis zu einer Viskosität von 14 Sekunden, gemessen nach DIN 53211 bei 50°C im 4 mm-Auslaufbecher kondensiert. Anschließend wurde mittels 20%iger Natronlauge auf pH 13 gestellt und abgekühlt. Die Konzentration, Viskosität und Lagerstabilität bei 25°C (angegeben als Viskosität gemäß DIN 53211 in Sekunden bei 20°C im 4 mm-Auslaufbecher nach 92 Tagen Lagerung) der erhaltenen Harzlösung sind in Tabelle 3 angegeben.

### Beispiel 20:

In einer Apparatur analog zu Beispiel 1 wurden 179 Teile Wasser, 126 Teile Melamin (1 Mol), 258,7 Teile Formalin 36,3 %ig (3,13 Mol) und 107,4 Teile Natriumdisulfit (1,13 Mol) mit 20 %iger Natronlauge auf pH 9,9 gestellt, auf 75°C erwärmt und so lange kondensiert, bis kein Sulfit mehr nachweisbar war. Anschließend stellte man durch Zugabe von 50 %iger Ameisensäure auf pH 6,3, setzte 3,84 Teile (0,03 Mol) Dimethylhydantoin zu, entsprechend einer Menge von 3 Mol% bezogen auf Melamin und stellte wieder auf pH 6,3. Es wurde nun bei 75°C bis zu einer Viskosität von 27 Sekunden, gemessen nach DIN 53211 bei 50°C im 4 mm-Auslaufbecher, kondensiert. Anschließend wurde mittels 20 %iger Natronlauge auf pH 9,2 gestellt und abgekühlt. Die Konzentration, Viskosität und Lagerstabilität (angegeben als Viskosität gemäß DIN 53211 in Sekunden bei 20°C im 6 mm-Auslaufbecher nach 92 Tagen Lagerung bei 25°C) der erhaltenen Harzlösung sind in Tabelle 3 angegeben.

### Beispiel 20 A:

Es wurde eine Harzlösung analog zu Beispiel 20 hergestellt, jedoch ohne Zugabe eines Hydantoinderivats. Konzentratin, Viskosität und Lagerstabilität (Viskosität gemäß DIN 53211 im 6 mm-Auslaufbecher) sind in Tabelle 3 angegeben.

### Beispiel 21:

Analog zu Beispiel 1 wurden zwei Harzlösungen hergestellt, wobei jedoch 126 Teile Melamin (1 Mol), 214,9 Teile Formalin 36,3 %ig (2,60 Mol), 107,4 Teile Natriumdisulfit (1,13 Mol) und 264,4 Teile Wasser, einmal mit 3,84 Teilen (3 Mol%) Dimethylhydantoin und einmal ohne Zusatz eines Hydantoinderivates eingesetzt wurden. Die saure Kondensation erfolgte bei pH 6,2. Es wurde bis zu einer bei 50°C gemessenen Viskosität von 14 Sekunden kondensiert, abschließend wurde die Harzlösung auf pH 9 eingestellt.

Die durch den Zusatz des Dimethylhydantoins verbesserte Lagerstabilität der Harzlösung wird aus folgender Zusammenstellung ersichtlich:

| | Konz.<br>(%) | Viskosität<br>(sec)<br>20°C | 50°C | Lagerstabilität (25°C)<br>(Visk. nach 92 Tagen)<br>(sec/20°C) |
|---|---|---|---|---|
| 3 Mol% DMH | 42,2 | 16 | 14 | 17 |
| kein Zusatz | 40,6 | 17 | 14 | 19 |

Beispiel 22:

Analog zu Beispiel 1 wurden zwei Harzlösungen hergestellt, wobei jedoch 126 Teile Melamin (1 Mol), 289,3 Teile Formalin 36,3 %ig (3,5 Mol), 107,4 Teile Natriumdisulfit (1,13 Mol) und 246,4 Teile Wasser, einmal mit 3,84 Teilen (3 Mol%) Dimethylhydantoin und einmal ohne Zusatz eines Hydantoinderivates eingesetzt wurden. Die saure Kondensation erfolgte bei pH 5,5 bis zu einer Viskosität von 14 Sekunden, gemessen bei 50°C; abschließend wurde auf pH 9 gestellt.

Die Konzentration, Viskosität und Lagerstabilität der beiden Harzlösungen sind aus folgender Zusammenstellung ersichtlich:

| | Konz.<br>(%) | Viskosität<br>(sec)<br>20°C | 50°C | Lagerstabilität (25°C)<br>(Visk. nach 92 Tagen)<br>(sec/20°C) |
|---|---|---|---|---|
| 3 Mol% DMH | 41,2 | 20 | 14 | 219 |
| kein Zusatz | 40,9 | 20 | 14 | Gel |

Beispiel 23:

Die verflüssigende Wirkung der erfindungsgemäßen Harzlösungen bei annähernd gleichen Endfestigkeiten wurde an einem Anhydritestrich dargestellt:

50 Teile natürlicher Anhydrit wurden mit 50 Teilen Zuschlag (Rundkorn 0 - 4 mm) trocken vorgemischt, mit 14,5 Teilen Wasser, in dem 0,25 Teile $Na_2SO_4$ und 0,725 Teile der Harzlösung gemäß Beispiel 8 gelöst waren, versetzt und 90 Sekunden intensiv gemischt.

Analog dazu wurde eine Anhydritmischung angesetzt, jedoch ohne Zugabe des erfindungsgemäßen Verflüssigers.

Analog dazu, um den wassereinsparenden Effekt bei Verwendung des erfindungsgemäßen Harzes und die damit erreichbaren weitaus höheren Endfestigkeiten bei annähernd gleichen Fließeigenschaften aufzuzeigen, wurde außerdem eine weitere Anhydritmischung ohne Verflüssiger, jedoch mit 21 Teilen Wasser angesetzt.

An den 3 Mischungen wurden die Fließfähigkeit, sowie die Biegezugfestigkeit und die Druckfestigkeit des erhärteten Estrichs nach 28 Tagen gemessen.

Zur Bestimmung der Fließfähigkeit wurde ein Vicat-Ring (DIN 1164, Blatt 5), der auf einer waagrechten Glasplatte auflag, mit der Mischung eben befüllt und nach oben abgezogen. An dem sich bildenden Fladen wurde als Maß für die Fließfähigkeit der Durchmesser in cm gemessen.

Die Bestimmung der Biegezug- und Druckfestigkeit erfolgte an 4 x 4 x 16 cm-Prismen (DIN 1164, Blatt 7) nach 28 Tagen.

Folgende Werte für Fließfähigkeit und Festigkeiten wurden erhalten:

| | Wasser-Anhydrit-<br>Verhältnis | Fließfähigkeit<br>(cm) | Biegezug-<br>festigkeit<br>28 Tage (MPa) | Druck-<br>festigkeit |
|---|---|---|---|---|
| 0,725 Teile Harzlösung | 0,29 | 23,0 | 4,34 | 21,6 |
| kein Zusatz | 0,29 | 10,5 | 4,41 | 18,4 |
| kein Zusatz | 0,42 | 20,0 | 2,23 | 7,80 |

Beispiel 24:

Die verflüssigende Wirkung des erfindungsgemäßen Harzes bei annähernd gleicher Endfestigkeit wurde an folgender Betonmischung aufgezeigt:

In einem 65 l Eirich-Zwangsmischer wurden 7,04 kg Zement PZ 275 H (Perlmooser Zement, Werk Kirchbichl) mit dem getrockneten Zuschlag (Rundkorn aus Holzleithen bei Linz: 20,23 kg 0 - 4 mm, 7,95 kg 4 - 8 mm, 6,18 kg 8 -16 mm, 9,71 kg 16 - 32 mm) 30 Sekunden vorgemischt, mit 2,59 kg Wasser versetzt, nach weiteren 30 Sekunden Mischdauer weitere 1,30 kg Wasser zugesetzt, 1 Minute gemischt, 46 g der Harzlösung entsprechend Beispiel 8 (0,65 Gew.% Harzlösung bezogen auf Zement) zugesetzt und 1 Minute gerührt.

Analog dazu wurde eine Betonmischung angesetzt, bei der an Stelle der Harzlösung 20 g eines Pulvers als Verflüssiger zugesetzt wurden, das man durch Sprühtrocknung der Harzlösung gemäß Beispiel 8 erhielt. Der Gehalt an festem Verflüssiger betrug 0,28 Gew.%, bezogen auf Zement.

Außerdem wurde analog dazu eine weitere Betonmischung ohne Zugabe des erfindungsgemäßen, verflüssigenden Harzes angesetzt.

An allen 3 Betonmischungen wurde die Fließfähigkeit als Ausbreitmaß in cm gemäß DIN 1048, Blatt 1, 1 Minute nach Beendigung des Mischvorganges gemessen. Die Messung der Druckfestigkeit erfolgte nach 18 Stunden und nach 28 Tagen, ebenfalls gemäß DIN 1048, Blatt 1, an Probewürfel mit 15 cm Kantenlänge.

Folgende Meßwerte für Fließfähigkeit und Festigkeit wurden erhalten:

300 kg Zement PZ 275 H/m³ Beton
Wasser-Zementwert: 0,55

|  | Fließfähigkeit (cm) | Druckfestigkeit (MPa) | |
| --- | --- | --- | --- |
|  |  | 18 h | 28 d |
| 0,65 % Harzlösung | 59,5 | 13,4 | 41,1 |
| 0,28 % Festharz | 60,0 | 13,2 | 40,9 |
| kein Zusatz | 35,5 | 12,5 | 40,0 |

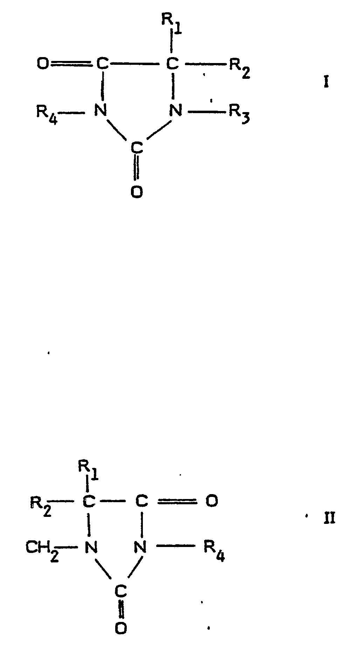

**Patentansprüche**

1. Lagerstabile konzentrierte wäßrige Lösungen von sulfonsäuregruppenhaltigen Melamin-Formaldehydkondensaten mit einem Gehalt an Amidgruppen enthaltenden cyclischen Verbindungen, dadurch gekennzeichnet, daß die cyclischen Verbindungen Hydantoinderivate der allgemeinen Formel (I), des Formelblattes, sind, in der $R_1$ und $R_2$ unabhängig voneinander Wasserstoff oder einen Alkylrest mit maximal 10 C-Atomen, $R_4$ Wasserstoff, einen Alkylolrest mit maximal 4 C-Atomen oder einen Carbonsäureamidrest mit maximal 4 C-Atomen und $R_3$ Wasserstoff, einen Alkylolrest mit maximal 4 C-Atomen, einen Carbonsäureamidrest mit maximal 4 C-Atomen oder einen Rest der allgemeinen Formel (II), des Formelblattes, in der $R_1$, $R_2$ und $R_4$ wie in Formel (I) definiert sind, bedeuten.

2. Lösungen gemäß Anspruch 1, dadurch gekennzeichnet, daß der Gehalt an dem Hydantoinderivat 0,1 bis 20 Mol% beträgt.

3. Lösungen gemäß Anspruch 1 oder 2, dadurch gekennzeichnet, daß der Gehalt an dem Hydantoinderivat 0,5 bis 10 Mol % beträgt.

4. Lösungen gemäß einem der Ansprüche 1 bis 3, dadurch gekennzeichnet, daß der Gehalt an dem Hydantoinderivat 1 bis 5 Mol % beträgt.

5. Lösungen gemäß einem der Ansprüche 1 bis 4, dadurch gekennzeichnet, daß sie in einer Konzentration von 30 bis 50 Gew.% vorliegen.

6. Lösungen gemäß einem der Ansprüche 1 bis 5, dadurch gekennzeichnet, daß das molare Verhältnis von Formaldehyd zu Melamin 2,5 : 1 bis 4 : 1 beträgt.

7. Lösungen gemäß einem der Ansprüche 1 bis 6, dadurch gekennzeichnet, daß das Hydantoinderivat 5,5-Dimethylhydantoin ist.

8. Verfahren zur Herstellung von Lösungen gemäß einem der Ansprüche 1 bis 7, dadurch gekennzeichnet, daß man Melamin, Formaldehyd und Alkalisulfit in wäßriger Lösung in mehreren Stufen bis zum gewünschten Kondensationsgrad kondensiert, wobei in der ersten Stufe ein pH-Wert von 8 - 12, in der zweiten Stufe von 3 - 7 eingehalten wird und abschließend auf einen pH-Wert von 7 -13 eingestellt wird, wobei das Hydantoinderivat zu einem beliebigen Zeitpunkt des Kondensationsverfahrens zugesetzt wird.

9. Verwendung von Lösungen gemäß einem der Ansprüche 1 bis 8, bzw. der aus diesen Lösungen durch Sprühtrocknung hergestellten Pulver, als Zusatzmittel zur Verbesserung der Fließeigenschaften von anorganischen Bindemitteln.

## Claims

1. Long-shelflife concentrated aqueous solutions of sulpho-containing melamine-formaldehyde condensates having a content of cyclic compounds containing amide groups, characterized in that the cyclic compounds are hydantoin derivatives of the general formula (I), of the formula sheet, in which $R_1$ and $R_2$ independently of each other denote hydrogen or an alkyl radical having at most 10 C atoms, $R_4$ denotes hydrogen, an alkylol radical having at most 4 C atoms or a carboxamide radical having at most 4 C atoms and $R_3$ denotes hydrogen, an alkylol radical having at most 4 C atoms, a carboxamide radical having at most 4 C atoms or a radical of the formula (II), of the formula sheet, in which $R_1$, $R_2$ and $R_4$ are as defined in the formula (I).

2. Solutions according to Claim 1, characterized in that the hydantoin derivative content is 0.1 to 20 mol %.

3. Solutions according to Claim 2, characterized in that the hydantoin derivative content is 0.5 to 10 mol %.

4. Solutions according to any one of Claims 1 to 3, characterized in that the hydantoin derivative content is 1 to 5 mol %.

5. Solutions according to any one of Claims 1 to 4, which are present in a concentration of 30 to 50 % by weight.

6. Solutions according to any one of Claims 1 to 5, characterized in that the molar ratio of formaldehyde to melamine is 2.5:1 to 4:1.

7. Solutions according to any one of Claims 1 to 6, characterized in that the hydantoin derivative is 5,5-dimethylhydantoin.

8. Process for preparing solutions according to any of Claims 1 to 7, characterized in that melamine, formaldehyde and alkali metal sulphite are condensed in aqueous solution in multiple stages to the desired degree of condensation, a pH of 8-12 being maintained in the first and of 3-7 in the second stage and finally a pH of 7-13 being set, the hydantoin derivative being added at any desired time in the condensation process.

9. Use of solutions according to any one of Claims 1 to 8 or of the powders prepared from these solutions by spray-drying, as additives for improving the flow properties of inorganic binders.

## Revendications

1. Solutions aqueuses concentrées de résines de condensation ou condensats de mélamine-formaldéhyde contenant des groupes acide sulfonique, de conservation stable, renfermant une teneur en composés cycliques contenant des groupes amide, caractérisées en ce que les composés cycliques sont des dérivés d'hydantoïne de formule générale (I), selon la planche des formules, dans laquelle $R_1$ et $R_2$ représentent indépendamment l'un de l'autre un atome d'hydrogène ou un radical alcoyle ayant au maximum 10 atomes de carbone, $R_4$ représente un atome d'hydrogène, un radical alcoylol ayant au maximum 4 atomes de carbone ou un radical carboxamide ayant au maximum 4 atomes de carbone et $R_3$ représente un atome d'hydrogène, un radical alcoylol ayant au maximum 4 atomes de carbone, un radical carboxamide ayant au maximum 4 atomes de carbone ou un radical de formule générale (II), selon la planche des formules, dans laquelle $R_1$, $R_2$ et $R_4$ sont définis comme dans la formule (I).

2. Solutions selon la revendication 1, caractérisées en ce que la teneur en dérivé d'hydantoïne s'élève de 0,1 à 20% en moles.

3. Solutions selon la revendication 1 ou 2, caractérisées en ce que la teneur en dérivé d'hydantoïne s'élève de 0,5 à 10% en moles.

4. Solutions selon l'une des revendications 1 à 3, caractérisées en ce que la teneur en dérivé d'hydantoïne s'élève de 1 à 5% en moles.

5. Solutions selon l'une des revendications 1 à 4, caractérisées en ce qu'elles se trouvent à une concentration de 30 à 50% en poids.

6. Solutions selon l'une des revendications 1 à 5, caractérisées en ce que le rapport molaire du formaldéhyde à la mélamine s'élève de 2,5:1 à 4:1.

7. Solutions selon l'une des revendications 1 à 6, caractérisées en ce que le dérivé d'hydantoïne est la 5,5-diméthylhydantoïne.

8. Procédé pour la préparation des solutions selon l'une des revendications 1 à 7, caractérisé en ce qu'on condense la mélamine, le formaldéhyde et un sulfite alcalin en solution aqueuse en plusieurs stades jusqu'au degré de condensation désiré, en maintenant une valeur de pH de 8–12 dans le premier stade, de 3–7 dans le second stade et finalement une valeur de pH de 7–13, le dérivé d'hydantoïne étant ajouté à un moment quelconque du processus de condensation.

9. Utilisation des solutions selon l'une des revendications 1 à 8, et de la poudre préparée par séchage par pulvérisation à partir de ces solutions, comme additifs pour l'amélioration des propriétés rhéologiques de liants inorganiques.

$$
\begin{array}{c}
R_1 \\
| \\
O = C - C - R_2 \\
| \quad\quad | \\
R_4 - N \quad\quad N - R_3 \\
\backslash \quad / \\
C \\
|| \\
O
\end{array}
\qquad \text{I}
$$

$$
\begin{array}{c}
R_1 \\
| \\
R_2 - C - C = O \\
| \quad\quad | \\
CH_2 - N \quad\quad N - R_4 \\
\backslash \quad / \\
C \\
|| \\
O
\end{array}
\qquad \text{II}
$$